(19) Europäisches Patentamt
European Patent Office
Office européen des brevets

(11) **EP 3 670 110 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **19217191.6**

(22) Anmeldetag: **17.12.2019**

(51) Internationale Patentklassifikation (IPC):
**B25J 9/16** (2006.01)

(52) Gemeinsame Patentklassifikation (CPC):
**B25J 9/1692**

(54) **VERFAHREN UND VORRICHTUNG ZUR DREHMOMENTSCHÄTZUNG**

METHOD AND DEVICE FOR ESTIMATING TORQUE

PROCÉDÉ ET DISPOSITIF D'ESTIMATION DU COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018 DE 102018133349**

(43) Veröffentlichungstag der Anmeldung:
**24.06.2020 Patentblatt 2020/26**

(73) Patentinhaber: **Pilz GmbH & Co. KG**
**73760 Ostfildern (DE)**

(72) Erfinder:
• **Graichen, Knut**
**73760 Ostfildern (DE)**
• **Bakovic, Daniel**
**73760 Ostfildern (DE)**
• **Gold, Tobias**
**73760 Ostfildern (DE)**
• **Völz, Andreas**
**91077 Neukirchen am Brand (DE)**

(74) Vertreter: **Witte, Weller & Partner Patentanwälte mbB**
**Postfach 10 54 62**
**70047 Stuttgart (DE)**

(56) Entgegenhaltungen:
**DE-A1- 102010 064 270      DE-A1- 102012 202 181**
**DE-B4- 112010 004 664      US-A1- 2015 276 436**

EP 3 670 110 B1

**Beschreibung**

Die vorliegende Erfindung betrifft Verfahren zur Schätzung eines Drehmoments, das auf ein Gelenk eines Roboters wirkt, sowie entsprechende Roboter.

Wesentliche Aufgaben in der industriellen Fertigung werden heutzutage von Robotern wahrgenommen, die zunehmend autonom arbeiten. Gleichwohl hat sich gezeigt, dass auch zukünftig der menschliche Bediener integraler Bestandteil moderner Fertigungsanlagen sein wird. Die Entwicklung konzentriert sich daher zunehmend auf den Bereich der sicheren Mensch-Roboter-Kollaboration, d.h. die Schaffung einer Umgebung, in der Menschen und Roboter uneingeschränkt zusammenarbeiten können.

Besonderes Augenmerk kommt dabei der Sicherheitstechnik zu, die so ausgelegt sein muss, dass für Menschen und Gegenstände zu keinem Zeitpunkt eine Gefahr durch die Zusammenarbeit mit den Robotern oder anderen autonom arbeitenden Einheiten entsteht. Hierfür ist es wichtig, dass ein Roboter oder eine autonom, arbeitende Einheit, die Umgebung und die darin agierenden Akteure "erkennt" und jederzeit Maßnahmen ergreifen kann, einer Verletzung von Personen oder einer Beschädigung von Gegenständen vorzubeugen.

Eine Möglichkeit seine Umwelt wahrzunehmen, besteht darin, einen Roboter empfindlich für Berührungen mit Objekten in seiner Umgebung zu machen, um hierüber einen Kollisionsschutz zu ermöglichen. Beispielsweise kann ein Roboter mit Drehmomentsensoren ausgestattet werden, die ein auf das Gelenk eines Roboters wirkendes Drehmoment bestimmen können. Hierdurch wird der Roboter in die Lage versetzt, bereits geringste Kräfte von außen zu registrieren und einen sicheren Kollisionsschutz zu realisieren, indem der Roboter bei einem unerwarteten Kontakt sein Tempo und damit seine kinetische Energie auf ein Maß reduziert, das Verletzungen oder Beschädigungen unterbindet.

Neben einer direkten Messung des Drehmoments ist es zudem möglich, das auf einen Roboter wirkende Drehmoment indirekt über andere Messgrößen abzuleiten und zu schätzen. So kann beispielsweise über den Motorstrom auf das wirkende Drehmoment geschlossen werden. Der Vorteil gegenüber einer direkten Messung mittels Drehmomentsensoren besteht darin, dass in der Regel auf eine ohnehin vorhandene Sensorik zurückgegriffen werden kann oder aber einfachere und günstigere Sensoren verwendet werden können, um die Messgrößen für die Ableitung zu bestimmen. Nachteilig ist jedoch, dass Schätz- und Ableitfehler bei der Bestimmung eines Drehmoments aus indirekter Messung zu berücksichtigen sind. Diese sind in der Regel komplexer und lassen sich schwieriger bestimmen als Messfehler einer direkten Messung.

DE 10 2012 202 181 A1 zeigt ein Verfahren zum Ermitteln eines auf ein Glied eines Roboterarms wirkenden Drehmoments. Die Ermittlung des Drehmoments basiert auf Ermittlung eines antriebsseitigen und eines abtriebsseitigen Drehwinkels eines Getriebes sowie auf einem mathematischen Modell des Getriebes, welches insbesondere elastische Eigenschaften des Getriebes berücksichtigt.

US 2015/0276436 A1 zeigt ein Winkelerfassungsverfahren, mit dem eine Steuerung zum Positionieren einer Abtriebswelle unter Verwendung eines Eingangswellencodierers und eines Abtriebswellencodierers mit hoher Genauigkeit und einer Torsionsrückkopplungssteuerung realisiert werden kann, wobei Erfassungsfehler des Abtriebswellencodierers korrigiert werden, indem beim Einstellen der Drehpositionsinformation Bezug auf den Eingangswellencodierer unter Berücksichtigung der durch die Übersetzung resultierend Periodizität genommen wird.

DE 10 2010 064 270 A1 und DE 11 2010 004664 B4 zeigen je weiteren Stand der Technik.

Es ist daher eine Aufgabe der vorliegenden Erfindung ein Verfahren zur Schätzung eines Drehmoments anzugeben, das die vorstehenden Nachteile berücksichtigt und eine präzise und zuverlässige Bestimmung eines Drehmoments auch für kritische Anwendungen erlaubt. Insbesondere ist es eine Aufgabe eine präzise und zuverlässige Bestimmung eines Drehmoments anzugeben, welche auf indirekter Messung beruht.

Gemäß einem Aspekt der vorliegenden Erfindung wird diese Aufgabe durch ein Verfahren zur Schätzung eines Drehmoments gemäß Anspruch 1 sowie durch einen entsprechenden Roboter gemäß Anspruch 12 gelöst.

Es ist somit eine Idee der vorliegenden Erfindung externe Einflüsse, die auf das Momentengleichgewicht eines Roboters wirken, über eine Schätzung zu bestimmten. Die Schätzung beruht dabei auf einer Drehverformung des verwendeten Getriebes.

Diese Schätzung wird optimiert, indem systematische Messfehler und Getriebe-inhärente Effekte kompensiert werden. Hierzu wird ein positionsabhängiger Fehler mit einem datenbasierten Ansatz für den Fall, dass keine äußeren Einflüsse anzunehmen sind, bestimmt. Der positionsabhängige Fehler wird anschließend zur Kompensation einer tatsächlichen Messung herangezogen. Der positionsabhängige Fehler berücksichtigt einen systematischen Messfehler und Störeffekte des Getriebes an bestimmen Gelenkpositionen und wird vorab durch eine Identifikationsroutine bestimmt.

Hierzu wird der Roboter während der Identifikationsroutine in einer vorbestimmten Weise bewegt, um für definierte Gelenkpositionen des Roboters einen Messfehler zu isolieren. Der isolierte Messfehler kann anschließend zur Kompensation der eigentlichen Messung herangezogen werden, beispielsweise in Form einer Nachschlagetabelle, die für bestimmte Positionen oder Posen des Roboters einen Kompensationswert bereitstellt.

Über eine Suchtabelle lässt sich besonders einfach und effizient eine tatsächliche Messung kompensieren, indem für jede Position ein Kompensationswert in der Suchtabelle nachgeschlagen werden kann.

Die Kompensation über einen vorbestimmten positionsabhängigen Messfehler ermöglicht eine präzise und zuverlässige Bestimmung externe Einflüsse, die auf das Momentengleichgewicht eines Roboters wirken, insbesondere ein extern auf ein Gelenk wirkendes Drehmoment, allein über die Momentschätzung basierend auf einer Drehverformung des Gelenkgetriebes. Zusätzliche Drehmomentsensoren können so eingespart werden. Zudem ist es denkbar, dass eine direkte Messung mittels Drehmomentsensoren durch die Momentschätzung präzisiert wird. Auf diese Weise kann eine gerade in der Sicherheitstechnik oftmals geforderte Redundanz erreicht werden bzw. eine Diversität erhöht werden, die Fehler gemeinsamer Ursache wirksam ausschließen kann, da unterschiedliche Messmethoden zur Bestimmung des Drehmoments verwendet werden. Die eingangsgenannte Aufgabe ist damit vollständig gelöst.

In einer bevorzugten Ausgestaltung umfasst die Identifikationsroutine eine definierte Bewegung des Gelenks.

Vorzugsweise erfolgt eine sequentielle Identifikation mit mehreren Durchläufen, wobei in jedem Durchlauf jeweils nur ein Gelenk des Roboters beweget wird. Auf diese Weise kann ein vereinfachtes dynamisches Modell des Roboters herangezogen werden, wodurch die Isolierung eines systematischen Messfehlers vereinfacht wird. Insbesondere können bei geeigneter Wahl der Bewegung des einzelnen Gelenks Zentripetal- und Coriolis-Effekte wirksam ausgeschlossen werden. Diese Ausgestaltung trägt somit zu einer besonders einfachen und präzisen Bestimmung des positionsabhängigen Fehlers bei.

Besonders bevorzugt ist die definierte Bewegung mit einer konstanten Geschwindigkeit. Auf diese Weise können ferner Massenträgheitsmomente vernachlässigt werden, wodurch das dynamische Modell des Roboters noch weiter vereinfacht wird, sodass im Wesentlichen nur noch Gravitationsmomente zu berücksichtigen sind.

In einer weiteren Ausgestaltung wird während der Identifikationsroutine eine Suchtabelle erstellt, die Positionsdaten in einem Gelenkraum des Gelenks mit Fehlerdrehwinkeln verknüpft.

Über eine Suchtabelle lässt sich besonders einfach und effizient eine tatsächliche Messung kompensieren, indem für jede Position ein Kompensationswert in der Suchtabelle nachgeschlagen werden kann.

Besonders bevorzugt ist zum Erstellen der Suchtabelle der Gelenkraum des Gelenks in diskrete, insbesondere äquidistante, Abschnitte unterteilt und jedem Abschnitt ist ein aggregierter Fehlerdrehwinkel aus den Fehlerdrehwinkeln zugeordnet. Diese Interpolation ermöglicht eine besonders effiziente Kompensation auch unter Echtzeitbedingungen.

Bevorzugt ist der kompensierte Drehwinkel in einem Abschnitt der gemessenen Drehwinkel abzüglich des aggregierten Fehlerdrehwinkels in diesem Abschnitt. Die Kompensation kann somit durch einfache Subtraktion erfolgen.

In einer weiteren Ausgestaltung wird während der Identifikationsroutine in einem definierten Intervall, ein Tupel bestimmt, welches jeweils Messwerte für eine gegenwärtige Position und Geschwindigkeit des Gelenks sowie einen Drehwinkel der Drehverformung des Getriebes an der gegenwärtigen Position umfasst und zu jedem Tupel aus den Messwerten jeweils ein Fehlerdrehwinkel an der gegenwärtigen Position bestimmt wird. Auf diese Weise kann die Identifikationsroutine besonders effizient und zügig durchgeführt werden.

In einer weiteren Ausgestaltung weist das Getriebe antriebsseitig und abtriebsseitig jeweils einen Positionssensor zur Messung des Drehwinkels der Drehverformung des Getriebes auf.

Über einen antriebsseitigen und abtriebsseitigen Positionssensor an dem Getriebe lässt sich besonders einfach eine Drehverformung des Getriebes bestimmen, indem ein Versatz der Positionssensoren ermittelt wird. Die Ausgestaltung über Positionssensoren lässt sich besonders kostengünstig realisieren und trägt somit insgesamt zu einer kostengünstigen Ausgestaltung des Schätzverfahrens bei.

In einer bevorzugten Ausgestaltung ist das Getriebe ein Wellgetriebe mit einem elastischen Übertragungselement.

Wellgetriebe ermöglichen eine besonders gute Schätzung des Drehmoments über die Drehverformung des Getriebes, da per Design durch das elastische Übertragungselement eine Drehverformung des Getriebes deutlicher ausgeprägt ist und sich somit leichter messen lässt.

Gemäß einem weiteren Aspekt der vorliegenden Erfindung wird die oben genannte Aufgabe ferner gelöst durch ein Verfahren zur Schätzung eines Drehmoments, das auf ein Gelenk eines Roboters wirkt, mit den Schritten: Bereitstellen eines Antriebs; Koppeln des Antriebs mit dem Gelenk über ein Getriebe; Messen eines Drehwinkels einer Drehverformung des Getriebes an einer Gelenkposition; Messen eines Motorstroms des Antriebs an der Gelenkposition; Bestimmen einer ersten Schätzung für das Drehmoment an der Gelenkposition aus dem gemessenen Drehwinkel; Bestimmen einer zweiten Schätzung für das Drehmoment an der Gelenkposition basierend auf dem gemessenen Motorstrom; und Fusionieren der ersten und der zweiten Schätzung zu einer konsolidierten Schätzung für das Drehmoment an der Gelenkposition.

Alternativ oder ergänzend kann die eingangs gestellte Aufgabe somit auch über eine Fusionierung zweier indirekter Messungen erfolgen. So kann einerseits eine Momentschätzung über den Motorstrom erfolgen und andererseits gleichzeitig eine Momentschätzung über die Drehverformung durchgeführt werden, wobei anschließend die Ergebnisse beider Schätzungen kombiniert werden.

Auch auf diese Weise können ohne zusätzliche Drehmomentsensoren externe Einflüsse, die auf das Momentengleichgewicht des Roboters wirken, präzise und zuverlässig bestimmt werden. Vorteilhaft können bei der Fusionierung bekannte Eigenschaften der jeweiligen Schätzverfahren berücksichtigt werden, so dass insgesamt ein präziseres Ergebnis erreicht wird, als bei einer einzelnen Schätzung möglich ist. Ebenso kann durch die Fusionierung zweier indirekter Messungen eine in der Sicherheitstechnik oftmals geforderte Redundanz erreicht werden sowie eine Diversität erhöht werden, da auf verschiedene Messverfahren zurückgegriffen wird. Die eingangs genannte Aufgabe ist somit auch hiermit vollständig gelöst.

In einer bevorzugten Ausgestaltung erfolgt das Fusionieren mit einer konstanten Gewichtung oder mit zeitvarianten Gewichten.

Durch eine Gewichtung kann die Fusionierung an verschiedene Eigenschaften der zu fusionierenden Schätzverfahren angepasst werden. So kann besonders vorteilhaft die Schätzung weiter optimiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen:

Fig. 1 eine schematische Darstellung eines Roboters gemäß einer Ausführungsform der vorliegenden Erfindung,

Fig. 2 ein Flussdiagramm eines Verfahrens gemäß einem ersten Aspekt der vorliegenden Erfindung,

Fig. 3 ein Flussdiagramm eines Verfahrens gemäß einem zweiten Aspekt der vorliegenden Erfindung, und

Fig. 4 eine schematische Darstellung eines bevorzugten Ausführungsbeispiels der Momentschätzung.

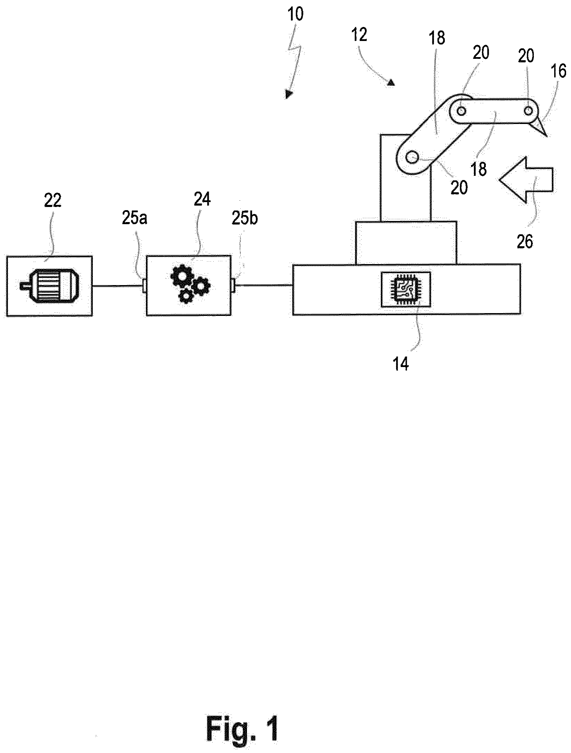

In der Fig. 1 ist ein Roboter gemäß einer Ausführungsform der Erfindung in seiner Gesamtheit mit der Bezugsziffer 10 bezeichnet.

Der Roboter 10 ist in diesem Ausführungsbeispiel ein Industrieroboter. Industrieroboter sind universell, programmierbare Maschinen zur Handhabung, Montage oder Bearbeitung von Werkstücken. Ein Industrieroboter umfasst einen Manipulator 12 (Roboterarm), eine Steuerung 14 sowie einen Effektor 16, der als Werkzeug oder Greifer ausgebildet sein kann.

Der in der Fig. 1 gezeigte Manipulator 12 weist hier exemplarisch zwei Glieder 18 und drei Gelenke 20 auf. Es versteht sich jedoch, dass die Erfindung nicht auf die hiergezeigte Anzahl an Gliedern und Gelenken beschränkt ist. Vielmehr können die vorgestellten Verfahren für eine Vielzahl von Gelenken einzelnen angewandt werden.

Die Glieder 18 des Manipulators 12 werden über die Gelenke 20 bewegt und von einem Antrieb 22, der über ein Getriebe 24 mit dem Roboter 10 gekoppelt ist, angetrieben. Das Getriebe 24 und der Antrieb 22 sind hier der Übersicht halber separat vom Manipulator 12 angedeutet. Vorzugsweise sind jedoch Antrieb 22 und Getriebe 24 im Manipulator 12, insbesondere in den Gelenken 20 integriert. Ferner kann für jedes Gelenk 20 ein eigener Antrieb 22 und ein eigenes Getriebe 24 vorgesehen sein.

Die Steuerung 14 steuert den oder die Antriebe 22 des Manipulators 12, so dass dieser eine vom Benutzer gewünschte Bewegung ausführt. Die Steuerung 14 kann eine programmierbare Steuerung sein, d.h. Arbeits- und Bewegungsabläufe können als Programm hinterlegt sein, die von der Steuerung 14 autonom ausgeführt werden.

Über eine externe oder integrierte Sensorik können zusätzlich Sensorinformationen von der Steuerung 14 aufgenommen werden, die Einfluss auf den Arbeits- oder Bewegungsablauf des Manipulators 12 nehmen. Üblicherweise ist ein antriebsseitiger Positionssensor 25a vorgesehen, über den eine Gelenkposition bestimmbar ist. Antriebsseitig bedeutet hier, dass der Positionssensor vor dem Getriebe, d.h. motorseitig angeordnet ist. Zusätzlich kann auch ein abtriebsseitige Positionssensor 25b vorhanden sein, d.h. ein Positionssensor, der dem Getriebe nachgelagert ist und sich zwischen dem Getriebe und dem Gelenk befindet. Ein solcher Sensor wird auch als gelenkseitiger Positionssensor bezeichnet. Anhand eines antriebsseitigen und eines abtriebsseitigen Positionssensors kann auf einfache Weise über den Versatz zueinander eine Drehverformung des Getriebes 24 in Form eines Drehwinkels bestimmt werden.

Die Steuerung 14 führt zudem Verfahren aus, über die sich externe Einflüsse, die auf das Momentengleichgewicht des Roboters 10 wirken bestimmen lassen. Insbesondere kann dies eine äußere Kraft 26 sein, die auf den Roboter wirkt und aus der ein entsprechendes Drehmoment an dem Gelenk 20 des Manipulators 12 resultiert.

Das Bestimmen des externen Drehmoments 26 ermöglicht es, bereits geringe Kräfte, die bei einer Berührung des Roboters 10 mit Personen oder Gegenständen wirken, zu registrieren. Auf diese Weise kann der Roboter 10 in die Lage versetzt werden, bei einer Kollision mit einem Hindernis, beispielsweise bei einer Berührung mit einem Menschen, entsprechende Steuerfunktionen über die Steuerung 14 auszuführen, die den Roboter veranlassen, zurückzuweichen oder in seiner Bewegung innezuhalten.

Bei einem Schätzverfahren handelt es sich hierbei um ein Verfahren, bei dem das Drehmoment nicht über eine direkte Messung mittels Drehmomentsensoren bestimmt wird, sondern das Drehmoment von einer anderen Messgröße her abgeleitet wird. Die Messgrößen können insbesondere von Sensoren aufgenommen werden, die standardmäßig bei einem Industrieroboter vorhanden sind. Diese Sensoren können u.a. Positionssensoren oder Strommesser sein, über die sich relevante Messgrößen direkt oder indirekt bestimmen lassen.

Im Rahmen der vorliegenden Offenbarung werden insbesondere zwei Methoden zur Drehmomentschätzung betrachtet. Eine erste Methode umfasst eine Drehmomentschätzung über den Motorstrom und die zweite Methode eine Drehmomentschätzung über eine Drehverformung des Getriebes.

Zur Bestimmung der zugehörigen Messgröße kann für die erste Methode ein Strommesser vorgesehen sein, der einen Strom zum Antrieb misst. Die Drehverformung des Getriebes 24 kann u.a. über Positionssensoren 25a, 25b an einem Antriebsglied und einem Abtriebsglied des Getriebes 24 bestimmt werden. Über den relativen Versatz der Glieder zueinander kann ein Drehwinkel bestimmt werden, der ähnlich wie der Motorstrom in einem definierten, modellierbaren Verhältnis zum wirkenden Drehmoment 26 steht. Ein solcher Versatz ist üblicherweise bei einem Wellgetriebe aufgrund des elastischen Elements größer als bei anderen Getrieben. Gleichwohl kommt es auch hier auf eine hohe Messgenauigkeit der Positionssensoren an.

Aufgrund des großen Übersetzungsverhältnisses N des Getriebes ist die Positionsauflösung des motorseitigen Positionssensors N-mal höher als die gelenkseitige Auflösung. Die Auflösung für den gemessenen Drehwinkel wird somit von der gelenkseitigen Auflösung begrenzt. Dabei ist es nicht ungewöhnlich, dass die Auflösung in der gleichen Größenordnung liegt wie die erwartete Torsionsverformung. Dementsprechend groß ist der Einfluss eines systematischen Fehlers in der Positionsmessung auf die Winkelmessung. Die Bestimmung des wirkenden Drehmoments aus dem Drehwinkel ist folglich zu optimieren, um diesen Effekt zu kompensieren.

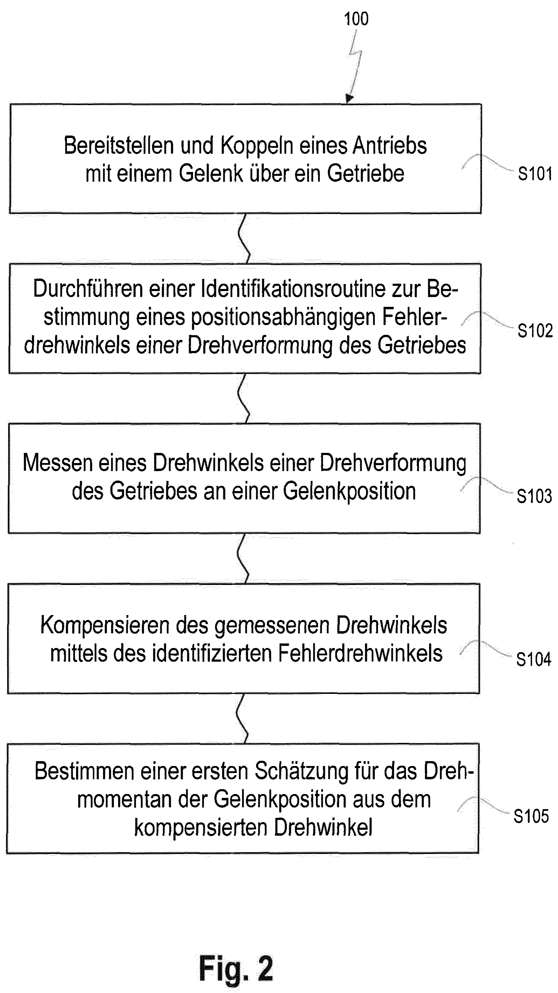

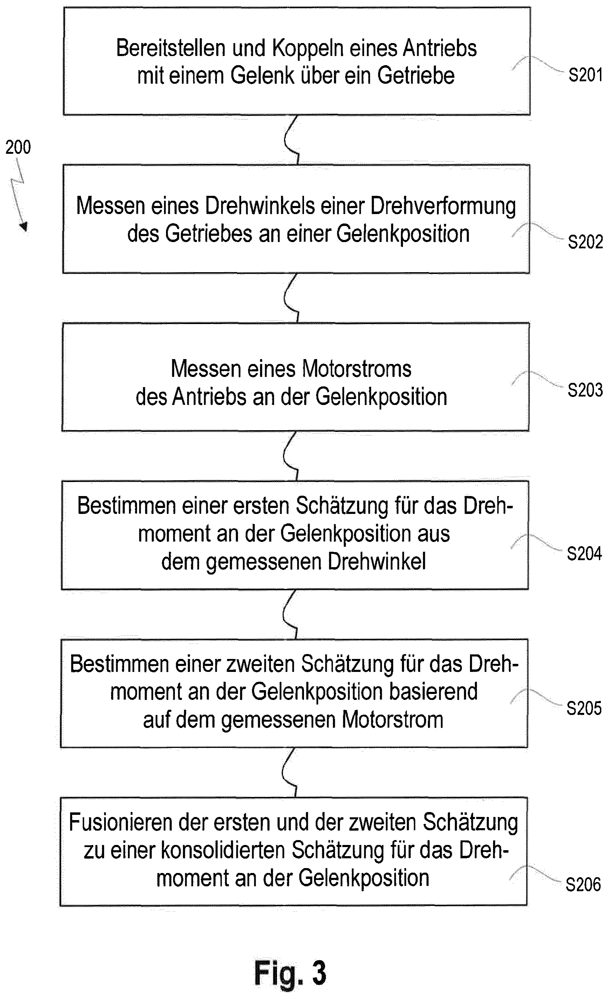

Zur Optimierung der Schätzung können die im Nachfolgenden aufgezeigten Verfahren einzeln oder sich ergänzend durchgeführt werden. Fig. 2 zeigt hierbei in einem Flussdiagramm ein Verfahren 100, welches eine Schätzung basierend auf einer Drehverformung optimiert, und Fig. 3 zeigt ein Verfahren 200, bei dem zwei Schätzverfahren miteinander kombiniert werden. Gleiche Bezugszeichen bezeichnen gleiche Teile wie in der Fig. 1.

Im Verfahren 100 gemäß Fig. 2 wird in einem ersten Schritt S101 ein Antrieb 22 des Roboters 10 bereitgestellt und über ein Getriebe 24 mit mindestens einem Gelenk 20 des Roboters 10 gekoppelt.

Anschließend wird im Schritt S102 eine Identifikationsroutine durchgeführt.

Die Identifikationsroutine beinhaltet eine definierte Ansteuerung des Roboters 10 in einem Zustand, in dem externe Einflüsse, die auf das Momentengleichgewicht des Roboters 10 wirken, ausgeschlossen werden können, d.h. der Roboter sich frei von Hindernissen im Arbeitsraum bewegen kann.

Ziel der Identifikationsroutine ist es eine Kennlinie zu bestimmen, die positionsabhängige Fehler beschreibt, die auf systematische Messfehler und stellungabhängige Störeffekte des Getriebes 24 zurückzuführen sind.

Indem der Roboter während der Identifikationsroutine in einer definierten Weise angesteuert wird, kann ein vereinfachtes dynamisches Modell des Roboters angenommen werden, über welches sich der positionsabhängige Fehler in Form eines ortsabhängigen Fehlerdrehwinkels bestimmen lässt. Die Identifikationsroutine kann hierfür sequenziell ausgeführt werden, wobei in jedem Durchgang jeweils nur ein Glied des Roboters bewegt wird. Auf diese Weise können Zentrifugal- und Corioliseffekte ausgeschlossen werden.

Ferner kann die definierte Ansteuerung eine Bewegung mit konstanter Geschwindigkeit sein, wodurch Massenträgheitsmomente vernachlässigt werden können.

Die definierte Ansteuerung ermöglicht es, die Bewegung des Roboters über ein vereinfachtes dynamisches Modell zu beschreiben.

Im Allgemeinen lässt sich ein Industrieroboter durch ein Bewegungsdifferentialgleichungssystem beschreiben:

$$M(q)\ddot{q} + C(q, \dot{q})\dot{q} + g(q) + \tau_{\text{ext}} = \tau_{\text{J}}$$

Dabei stellt M die Massenträgheitsmatrix dar, der Vektor C bezeichnet die generalisierten Zwangsmomente verursacht durch Zentripetal- und Corioliskräfte in den Gelenken, und g ist der Vektor der generalisierten Gravitationsmomente. $\tau_{\text{J}}$ beschreibt das von dem Getriebe übertragene Moment, welches sich aus dem Motordrehmoment abzüglich der Reibmomente des Motor und des Getriebes ergibt. q(t) bezeichnet weiterhin den Vektor der Bewegungskoordinaten der Achsen und $\tau_{\text{ext}}$ bildet die externen Einflüsse ab, die auf das Momentengleichgewicht wirken und welche es zu bestimmen gilt.

Durch die definierte Ansteuerung lassen sich einzelne Terme, insbesondere die Massenträgheitsmomente und Zwangsmomente, aus dem Modell entfernen, so dass im Wesentlichen lediglich Gravitationsmomente zu berücksichtigen sind.

Während der Identifikationsroutine werden vorzugsweise in Intervallen jeweils Tupel an Messwerten aufgenommen, welche jeweils eine gegenwärtige Position und Geschwindigkeit des Gelenks sowie ein Drehwinkel der Drehverformung des Getriebes an der gegenwärtigen Position umfassen.

Anhand des vereinfachten dynamischen Modells kann dann jedem Tupel ein Fehler zugeordnet werden, woraus sich eine Suchtabelle ergibt, die Positionsdaten in einem Gelenkraum des Gelenks mit Fehlerdrehwinkeln verknüpft.

EP 3 670 110 B1

Vorzugsweise wird hierfür der Gelenkraum des Gelenks in diskrete, insbesondere äquidistante, Abschnitte unterteilt und jedem Abschnitt ein aggregierter Fehlerdrehwinkel aus den Fehlerdrehwinkeln zugeordnet.

Die aus der Identifikationsroutine gewonnenen Daten, insbesondere die Suchtabelle, kann in der Steuerung 14 des Roboters 10 oder einem zugehörigen Speicher hinterlegt werden und für die Kompensation herangezogen werden.

Es versteht sich, dass die Identifikationsroutine mindestens einmal vor einer eigentlichen Messung durchgeführt werden muss, um die entsprechenden Daten zu bestimmen. Darüber hinaus kann die Identifikationsroutine auch bei jedem Systemstart oder in definierten Zyklen erneut durchgeführt werden, um den positionsabhängigen Fehler zu aktualisieren.

Schritt S103 bezeichnet einen tatsächlichen Messvorgang, bei dem ein Drehwinkel einer Drehverformung des Getriebes an einer Gelenkposition gemessen wird.

Der gemessenen Drehwinkel wird anschließend im Schritt S104 durch die während der Identifikationsroutine bestimmten Daten kompensiert. Vorzugsweise wird hierfür aus den Daten ein Fehlerdrehwinkel an der gegebenen Position bestimmt und von dem gemessenen Drehwinkel abgezogen, um einen kompensierten Drehwinkel zu erhalten.

Im Schritt S105 wird dann aus dem kompensierten Drehwinkel über eine an sich bekannte Beziehung zwischen Drehwinkel und wirkendem Drehmoment eine Schätzung für das wirkende Drehmoment angegeben.

Die an sich bekannte Beziehung zwischen Drehwinkel und wirkendem Drehmoment kann beispielsweise durch eine kubische Kurve der folgenden Form modelliert werden:

$$\tau_{\mathrm{t},j} = k_{\mathrm{l},j}(\Delta q_j) + k_{\mathrm{c},j}(\Delta q_j)^3 \quad \forall j = 1, \ldots, n$$

Hierbei steht $k_{\mathrm{l},j}$ für die lineare Steifigkeit und $k_{\mathrm{c},j}$ für die kubische Steifigkeit des j-ten Glieds. Es versteht sich, dass das Verfahren nicht auf dieses Modell beschränkt ist, sondern auch andere Modellierungen der Beziehung in Betracht kommen können.

Das gemäß dem in Fig. 2 beschriebenen Verfahren bestimmte Drehmoment ist wesetlich präziser als eine Schätzung ohne Fehlerkompensation, insbesondere bei der Verwendung von Getrieben mit einer großen Untersetzung.

Alternativ oder ergänzend zu dem in Bezug auf Fig. 2 erläuterten Verfahren kann eine Momentschätzung auch über eine Fusionierung zweier indirekter Messungen präzisiert werden, wie nachflogen mit Bezug auf die Fig. 3 gezeigt wird.

Fig. 3 zeigt in einem Flussdiagramm ein alternatives Verfahren zur Momentschätzung gemäß der vorliegenden Erfindung.

Bei dem alternativen Verfahren wird die Drehmomentschätzung optimiert, indem zwei unabhängige Schätzungen durchgeführt werden und deren Ergebnisse zu einem Gesamtergebnis fusioniert werden.

Wie beim zuvor beschriebenen Verfahren wird zunächst im Schritt S201 ein Antrieb 22 bereitgestellt und dieser über ein Getriebe 24 mit dem Gelenk 20 des Roboters 10 gekoppelt. Anschließend erfolgen die beiden unabhängigen Schätzungen, indem die hierfür relevanten Messgrößen aufgenommen werden.

Im Schritt S202 wird hierzu ein Drehwinkel einer Drehverformung des Getriebes an einer Gelenkposition gemessen. Dies erfolgt bevorzugt durch an- und abtriebsseitige Positionssensoren, deren gegenseitiger Versatz einen Drehwinkel ergibt, der repräsentativ für die Drehverformung des Getriebes 24 ist.

Im Schritt S203 wird zudem, vorzugsweise gleichzeitig, der Motorstrom des Antriebs an dieser Gelenkposition gemessen.

Anschließend erfolgt in den Schritten S204 und S205 jeweils eine unabhängige Schätzung für das wirkende Drehmoment.

Im Schritt S204 erfolgt eine erste Schätzung des Drehmoments an der Gelenkposition aus dem gemessenen Drehwinkel. Im Schritt S205 erfolgt eine zweite Schätzung für das Drehmoment an der Gelenkposition basierend auf dem gemessenen Motorstrom.

Abschließend werden im Schritt S206 die erste und die zweite Schätzung zu einer konsolidierten Schätzung für das Drehmoment an der Gelenkposition fusioniert. Ziel der Fusionierung ist es dabei, ein besseres Gesamtergebnis für die Schätzung des Drehmoments zu erhalten, indem die einzelnen Schätzungen günstig miteinander kombiniert werden.

Die Fusionierung kann einerseits mit einer konstanten Gewichtung erfolgen und andererseits mit zeitvarianten Gewichten.

Beim ersten Ansatz erfolgt die Fusionierung bei der Schätzung basierend auf der Wahrscheinlichkeitstheorie. Zu diesem Zweck werden die Schätzungen als Wahrscheinlichkeitsdichten mit den Mitteln $\mu_{\mathrm{t}} = \hat{\tau}_{\mathrm{ext,t}}$ und $\mu_{\mathrm{m}} = \hat{\tau}_{\mathrm{ext,m}}$ zusammen mit den Schätzvarianten $\sigma_{\mathrm{t}}^2$ und $\sigma_{\mathrm{m}}^2$ modelliert. Die Verteilungen, wenn kein $\hat{\tau}_{\mathrm{ext}}$ anliegt, sind mittelfrei für $\mu_{\mathrm{t}} = \mu_{\mathrm{m}} \approx 0$.

Wird die Wahrscheinlichkeitsdichte durch eine Gauß'sche Verteilung approximiert, können die Parameter der bedingten Gauß'schen Wahrscheinlichkeit unter Berücksichtigung der beiden individuellen Schätzwahrscheinlichkeiten nach der Bayes-Regel bestimmt werden als

$$\hat{\tau}_{\text{ext,f}} = \frac{\sigma_{\text{m}}^2}{\sigma_{\text{t}}^2 + \sigma_{\text{m}}^2}\mu_t + \frac{\sigma_{\text{t}}^2}{\sigma_{\text{t}}^2 + \sigma_{\text{m}}^2}\mu_{\text{m}}$$

und

$$\hat{\sigma}_{\text{ext,f}}^2 = \frac{\sigma_{\text{t}}^2\sigma_{\text{m}}^2}{\sigma_{\text{t}}^2 + \sigma_{\text{m}}^2} < \sigma_{\text{t}}^2, \sigma_{\text{m}}^2.$$

Hieraus ergibt sich, dass die Varianz nach Einführung beider Schätzungen kleiner ist als die niedrigste individuelle Varianz und die konsolidierte Schätzung somit zu einem besseren Gesamtergebnis führt.

Beim zweiten Ansatz erfolgt das Fusionieren mit zeitvarianten Gewichten. Die Idee hierbei ist, jeweils die individuelle Schätzung zu bevorzugen, die näher an der Erwartung eines externen Moments von 0 liegt. Hierbei wird die Abweichung für die Gewichtung der einzelnen Schätzungen auf das quadrierte geschätzte externe Moment geändert.

Dies führt zu einer Formulierung der Form

$$\hat{\tau}_{\text{ext,f}} = \frac{\hat{\tau}_{\text{ext,m}}^2}{\hat{\tau}_{\text{ext,t}}^2 + \hat{\tau}_{\text{ext,m}}^2}\hat{\tau}_{\text{ext,t}} + \frac{\hat{\tau}_{\text{ext,t}}^2}{\hat{\tau}_{\text{ext,t}}^2 + \hat{\tau}_{\text{ext,m}}^2}\hat{\tau}_{\text{ext,m}},$$

d.h. die Gewichte sind umgekehrt proportional zum zugehörigen quadratischen Abstand.

Hierdurch reduziert sich die Varianz, da Schätzwerte nahe 0 bevorzugt betrachtet werden. Dies hat zur Folge, dass, wenn sich beispielsweise nur eine Schätzung erhöht, die andere Schätzung, die näher bei 0 liegt, die Fusionsschätzung insgesamt dominiert. Steigen hingegen beide individuellen Schätzungen, beispielsweise aufgrund eines externen Moments, steigt auch die Gesamtschätzung.

Basierend auf der gewichteten Summe beider Schätzungen liegt die fusionierte Schätzung immer zwischen den beiden Einzelschätzungen, aber mit einer Tendenz zur Schätzung, die mehr bei 0 liegt.

Es versteht sich, dass die Fusionierung nicht auf die beiden vorstehend genannten Ansätze beschränkt ist. Als weiterer Ansatz wäre beispielsweise ebenso eine Gewichtung über die Geschwindigkeit denkbar, wobei bei niedrigeren Geschwindigkeiten das Torsionsmoment bevorzugt wird und bei höheren Geschwindigkeiten das über den Strom ermittelte Moment.

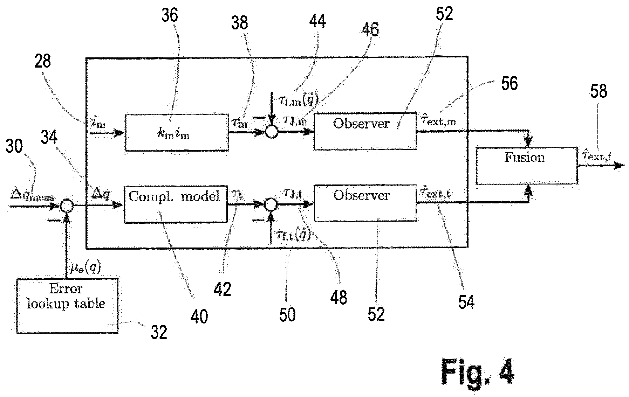

Fig. 4 zeigt abschließend ein bevorzugtes Ausführungsbeispiel, bei dem die beiden vorstehend beschriebenen Verfahren kombiniert werden.

Im Ausführungsbeispiel gemäß Fig. 4 findet somit einerseits eine optimierte Schätzung über die Drehverformung des Getriebes unter Anwendung der Kompensation über einen vorab bestimmten positionsabhängigen Fehler statt. Andererseits wird gleichzeitig das so geschätzte Drehmoment mit einer Drehmomentschätzung basierend auf dem Motorstrom fusioniert.

In der Fig.4 ist oberhalb der gestrichelten Linie die Momentschätzung über den Motorstrom angedeutet und unterhalb der gestrichelten Linie die Momentschätzung über die optimierte Schätzung basierend auf der Drehverformung des Getriebes.

Die Messgrößen, die am Eingang anliegen, sind somit einerseits der Motorstrom 28 und andererseits der gemessene Drehwinkel 30. Der gemessene Drehwinkel 30 wird, wie im Zusammenhang mit der Fig. 2 ausführlich beschrieben, über eine Suchtabelle 32 kompensiert. Das Ergebnis der Kompensation ist ein kompensierter Drehwinkel 34.

Anhand eines Motorstrommodells 36 wird anschließend ein Motordrehmoment 38 bestimmt. Ebenso wird über den kompensierten Drehwinkel 34 und ein Drehverformungsmodell 40 des Getriebes 24 ein Torsionsmoment 42 bestimmt.

Über ein erstes Reibmodell 44 wird anschließend sowohl die Motorreibung als auch die Getriebereibung berücksichtigt, die sich beispielweise in der Form

$$\boldsymbol{\tau}_{\text{f,m}}(\dot{\boldsymbol{q}}) = \boldsymbol{C}_{\text{c,m}}\mathbf{sgn}(\dot{\boldsymbol{q}}) + \boldsymbol{C}_{\text{v,m}}\dot{\boldsymbol{q}}$$

darstellen lässt. In diesem Beispiel beschreibt $C_{\text{c,m}}\text{sgn}(\dot{q})$ die Coulomb-Reibung und $C_{\text{v,m}}\dot{q}$ die viskose Reibung des Getriebes. Unter Berücksichtigung beider Reibungskomponenten kann aus dem Motordrehmoment das tatsächlich übertragene Moment 46 bestimmt werden. Es versteht sich, dass das Verfahren nicht auf das hier dargestellte Reibmodell 44 beschränkt ist, sondern auch andere Modellierungen in Betracht kommen können.

Analog kann das übertragene Torsionsmoment 48 aus dem Torsionsmoment 42 abzüglich der Getriebereibung bestimmt werden, die sich über ein zweites Reibmodell 50 bestimmen lässt. Das zweite Reibmodell 50 kann bspw.

vorteilhaft nur die Getriebereibung umfassen: $\tau_{f,t}(\dot{q}) = C_{v,t}\dot{q}$. Auch hier gilt, dass andere Modellierungen der Reibung denkbar sind.

Aus dem übertragenen Motordrehmoment 46 und dem übertragenen Torsionsmoment 48 kann anschließend in an sich bekannter Weise ein erster Schätzwert 54 und ein zweiter Schätzwert 56 für das externe Drehmoment 26 an der gegenwärtigen Position bestimmt werden.

Während diese Bestimmung einerseits auf direktem Wege über das dynamische Modell des Roboters möglich ist, biete es sich an, die Werte indirekt über einen Störbeobachter 52 zu bestimmen, da hierfür weder die Beschleunigung unmittelbar gemessen noch die inverse Massenträgheitsmatrix berechnet werden muss. Die Berechnung kann so vorteilhaft vereinfacht werden.

Abschließend werden der erste und der zweite Schätzwert 54, 56 zu einer konsolidierten Schätzung 58 fusioniert. Die Fusionierung kann in der mit Bezug auf Fig. 3 erläuterten Weise erfolgen und die verschiedenen Ansätze zur Fusionierung umfassen.

**Patentansprüche**

1. Verfahren (100) zur Schätzung eines Drehmoment, das auf ein Gelenk (20) eines Roboters (10) wirkt, mit den Schritten:

   - Bereitstellen (S101; S201) eines Antriebs (22);
   - Koppeln (S101; S201) des Antriebs (22) mit dem Gelenk (20) über ein Getriebe (24);
   - Messen (S103; S202) eines Drehwinkels (30) einer Drehverformung des Getriebes (22) an einer Gelenkposition;

   **gekennzeichnet durch**:

   - Durchführen (S102) einer Identifikationsroutine zur Bestimmung eines positionsabhängigen Fehlerdrehwinkels einer Drehverformung des Getriebes (24), wobei während der Identifikationsroutine eine Suchtabelle (32) erstellt wird, die Positionsdaten in einem Gelenkraum des Gelenks mit identifizierten Fehlerdrehwinkeln verknüpft;
   - Kompensieren (S104) des gemessenen Drehwinkels (30) mittels des positionsabhängigen Fehlerdrehwinkels aus der Suchtabelle (32); und
   - Bestimmen (S105) einer ersten Schätzung (54) für das Drehmoment an der Gelenkposition aus dem kompensierten Drehwinkel (34),

   wobei der Roboter (10) während der Identifikationsroutine in einer definierten Weise angesteuert wird und sich der Roboter (10) während der definierten Ansteuerung in einem Zustand befindet, in dem externe Einflüsse, die auf ein Momentengleichgewicht des Roboters (10) wirken, ausgeschlossen werden können.

2. Verfahren nach Anspruch 1, wobei die Identifikationsroutine eine definierte Bewegung des Gelenks (20) umfasst.

3. Verfahren nach Anspruch 2, wobei die definierte Bewegung eine Bewegung mit einer konstanten Geschwindigkeit ist.

4. Verfahren nach einem der Ansprüche 1 bis 3, wobei zum Erstellen der Suchtabelle (32) der Gelenkraum des Gelenks (20) in diskrete, insbesondere äquidistante, Abschnitte unterteilt wird und jedem Abschnitt ein aggregierter Fehlerdrehwinkel aus den identifizierten Fehlerdrehwinkeln zugeordnet wird.

5. Verfahren nach Anspruch 4, wobei der kompensierte Drehwinkel (34) in einem Abschnitt der gemessene Drehwinkel (30) des aggregierten Fehlerdrehwinkels in diesem Abschnitt ist.

6. Verfahren nach einem der vorherigen Ansprüche, wobei während der Identifikationsroutine in einem definierten Intervall, ein Tupel bestimmt wird, welches jeweils Messwerte für eine gegenwärtige Position und Geschwindigkeit des Gelenks (20) sowie einen Drehwinkel der Drehverformung des Getriebes an der gegenwärtigen Position umfasst und zu jedem Tupel aus den Messwerten jeweils ein Fehlerdrehwinkel an der gegenwärtigen Position bestimmt wird.

7. Verfahren nach einem der vorherigen Ansprüche, wobei das Getriebe (24) antriebsseitig und abtriebsseitig einen Positionssensor zur Messung des Drehwinkels der Drehverformung des Getriebes aufweist.

8. Verfahren nach einem der vorherigen Ansprüche, wobei das Getriebe (24) ein Wellgetriebe mit einem elastischen Übertragungselement ist.

9. Verfahren nach einem der vorherigen Ansprüche, ferner umfassend:

- Messen (S203) eines Motorstroms (28) des Antriebs (22) an der Gelenkposition;
- Bestimmen (S205) einer zweiten Schätzung (56) für das Drehmoment an der Gelenkposition basierend auf dem gemessenen Motorstrom (28); und
- Fusionieren (S206) der ersten und der zweiten Schätzung (54, 56) zu einer konsolidierten Schätzung (58) für das Drehmoment an der Gelenkposition.

10. Verfahren nach Anspruch 9, wobei das Fusionieren mit einer konstanten Gewichtung oder mit zeitvarianten Gewichten erfolgt.

11. Computerprogramm umfassend Befehle, die bei der Ausführung des Programms durch einen Computer diesen veranlassen, das Verfahren nach einem der Ansprüche 1 bis 10 auszuführen.

12. Roboter, umfassend:

ein Gelenk (20), einen Antrieb (22), ein Getriebe (24) zum Koppeln des Antriebs (22) mit dem Gelenk (20), sowie eine Steuerung (14) zur Schätzung eines Drehmoments, das auf das Gelenk (20) wirkt,
wobei die Steuerung (14) eingerichtet ist,
einen Drehwinkel (30) einer Drehverformung des Getriebes (24) an einer Gelenkposition zu messen,

**dadurch gekennzeichnet, dass** die Steuerung (14) eingerichtet ist:

eine Identifikationsroutine zur Bestimmung eines positionsabhängigen Fehlerdrehwinkels einer Drehverformung des Getriebes (24) durchzuführen, wobei das Durchführen der Identifikationsroutine das Erstellen einer Suchtabelle (32) beinhaltet, die Positionsdaten in einem Gelenkraum des Gelenks mit identifizierten Fehlerdrehwinkeln verknüpft,
den gemessenen Drehwinkel (30) mittels des positionsabhängigen Fehlerdrehwinkels aus der Suchtabelle (32) zu kompensieren und
eine erste Schätzung (54) für das Drehmoment an der Gelenkposition aus dem kompensierten Drehwinkel (34) zu bestimmen,

wobei der Roboter (10) während der Identifikationsroutine in einer definierten Weise angesteuert wird und sich der Roboter (10) während der definierten Ansteuerung in einem Zustand befindet, in dem externe Einflüsse, die auf ein Momentengleichgewicht des Roboters (10) wirken, ausgeschlossen werden können.

13. Verfahren nach einem der Ansprüche 1 bis 10 oder Roboter nach Anspruch 12, wobei sich der Roboter (10) während der definierten Ansteuerung frei von Hindernissen in einem Arbeitsraum bewegt.

**Claims**

1. Method (100) for estimating a torque acting on a joint (20) of a robot (10), comprising the steps of:

- providing (S101; S201) a drive (22);
- coupling (S101; S201) the drive (22) to the joint (20) via a transmission (24);
- measuring (S103; S202) a rotational angle (30) of a rotational deformation of the transmission (24) at a joint position;

**characterized by**:

- performing (S102) an identification routine for determining a position-dependent error rotational angle of a rotational deformation of the transmission (24), wherein during the identification routine a lookup table (32) is generated which associates position data in a joint space of the joint with identified error rotational angles;
- compensating (S104) the measured rotational angle (30) by means of the position-dependent error rotational angle from the lookup table (32); and

- determining (S105) a first estimate (54) of the torque at the joint position from the compensated rotational angle (34),

wherein the robot (10) is controlled in a defined manner during the identification routine, and the robot (10) is in a state during said defined control in which external influences acting on a moment equilibrium of the robot (10) can be excluded.

2. The method according to claim 1, wherein the identification routine comprises a defined movement of the joint (20).

3. The method according to claim 2, wherein the defined movement is a movement at a constant velocity.

4. The method according to any one of claims 1 to 3, wherein, for generating the lookup table (32), the joint space of the joint (20) is divided into discrete, in particular equidistant, sections, and an aggregated error rotational angle derived from the identified error rotational angles is assigned to each section.

5. The method according to claim 4, wherein the compensated rotational angle (34) in a section is the measured rotational angle (30) of the aggregated error rotational angle in this section.

6. The method according to any one of the preceding claims, wherein, during the identification routine, within a defined interval, a tuple is determined which comprises measurement values for a current position and velocity of the joint (20) as well as a rotational angle of the rotational deformation of the transmission at the current position, and for each tuple an error rotational angle at the current position is determined from the measurement values.

7. The method according to any one of the preceding claims, wherein the transmission (24) comprises a position sensor on a drive side and on an output side for measuring the rotational angle of the rotational deformation of the transmission.

8. The method according to any one of the preceding claims, wherein the transmission (24) is a harmonic drive having an elastic transmission element.

9. The method according to any one of the preceding claims, further comprising:

- measuring (S203) a motor current (28) of the drive (22) at the joint position;
- determining (S205) a second estimate (56) of the torque at the joint position based on the measured motor current (28); and
- fusing (S206) the first and second estimates (54, 56) into a consolidated estimate (58) of the torque at the joint position.

10. The method according to claim 9, wherein the fusing is performed with a constant weighting or with time-varying weights.

11. A computer program comprising instructions which, when executed by a computer, cause the computer to carry out the method according to any one of claims 1 to 10.

12. A robot comprising:

a joint (20), a drive (22), a transmission (24) for coupling the drive (22) to the joint (20), and a controller (14) for estimating a torque acting on the joint (20),
wherein the controller (14) is configured to,
measure a rotational angle (30) of a rotational deformation of the transmission (24) at a joint position,
**characterized in that** the controller (14) is configured to:

perform an identification routine for determining a position-dependent error rotational angle of a rotational deformation of the transmission (24), wherein performing the identification routine includes generating a lookup table (32) that associates position data in a joint space of the joint with identified error rotational angles,
compensate the measured rotational angle (30) by means of the position-dependent error rotational angle from the lookup table (32), and

determine a first estimate (54) of the torque at the joint position from the compensated rotational angle (34),

wherein the robot (10) is controlled in a defined manner during the identification routine, and the robot (10) is in a state during said defined control in which external influences acting on a moment equilibrium of the robot (10) can be excluded.

13. The method according to any one of claims 1 to 10 or the robot according to claim 12, wherein the robot (10) moves freely of obstacles within a workspace during the defined control.

**Revendications**

1. Procédé (100) pour l'estimation d'un moment de rotation agissant sur une articulation (20) d'un robot (10), comportant les étapes consistant à :

   - fournir (S101 ; S201) un entraînement (22) ;
   - accoupler (S101 ; S201) l'entraînement (22) à l'articulation (20) par l'intermédiaire d'une transmission (24) ;
   - mesurer (S103 ; S202) un angle de rotation (30) d'une déformation en rotation de la transmission (22) à une position d'articulation ;

   **caractérisé par** :

   - la mise en œuvre (S102) d'une routine d'identification pour la détermination d'un angle de rotation d'erreur dépendant de la position d'une déformation en rotation de la transmission (24), dans lequel un tableau de recherche (32) est créé pendant la routine d'identification, lequel tableau de recherche combine des données de position dans un espace d'articulation de l'articulation et des angles de rotation d'erreur identifiés ;
   - la compensation (S104) de l'angle de rotation (30) mesuré au moyen de l'angle de rotation d'erreur dépendant de la position provenant du tableau de recherche (32) ; et
   - la détermination (S105) d'une première estimation (54) pour le moment de rotation à la position d'articulation à partir de l'angle de rotation compensé (34),

   dans lequel le robot (10) est commandé d'une manière définie pendant la routine d'identification et le robot (10) se trouve, pendant la commande définie, dans un état dans lequel des influences externes agissant sur un équilibre de moment du robot (10) peuvent être exclues.

2. Procédé selon la revendication 1, dans lequel la routine d'identification comprend un déplacement défini de l'articulation (20).

3. Procédé selon la revendication 2, dans lequel le déplacement défini est un déplacement à une vitesse constante.

4. Procédé selon l'une des revendications 1 à 3, dans lequel, pour la création du tableau de recherche (32), l'espace d'articulation de l'articulation (20) est divisé en sections discrètes, en particulier équidistantes, et chaque section est associée à un angle de rotation d'erreur agrégé parmi les angles de rotation d'erreur identifiés.

5. Procédé selon la revendication 4, dans lequel l'angle de rotation compensé (34) dans une section est l'angle de rotation (30) mesuré de l'angle de rotation d'erreur agrégé dans ladite section.

6. Procédé selon l'une des revendications précédentes, dans lequel, pendant la routine d'identification, à un intervalle défini, un n-uplet est déterminé, lequel comprend respectivement des valeurs de mesure pour une position et une vitesse actuelles de l'articulation (20) ainsi qu'un angle de rotation de la déformation en rotation de la transmission à la position actuelle et, pour chaque n-uplet, respectivement un angle de rotation d'erreur à la position actuelle est déterminé à partir des valeurs de mesure.

7. Procédé selon l'une des revendications précédentes, dans lequel la transmission (24) présente, côté entraînement et côté entraînement de sortie, un capteur de position pour la mesure de l'angle de rotation de la déformation en rotation de la transmission.

8. Procédé selon l'une des revendications précédentes, dans lequel la transmission (24) est une transmission à arbre comportant un élément de transmission élastique.

9. Procédé selon l'une des revendications précédentes, comprenant en outre :

- la mesure (S203) d'un courant de moteur (28) de l'entraînement (22) à la position d'articulation ;
- la détermination (S205) d'une seconde estimation (56) pour le moment de rotation à la position d'articulation sur la base du courant de moteur (28) mesuré ; et
- la fusion (S206) de la première et de la seconde estimation (54, 56) en une estimation consolidée (58) pour le moment de rotation à la position d'articulation.

10. Procédé selon la revendication 9, dans lequel la fusion est effectuée avec une pondération constante ou avec des pondérations variant dans le temps.

11. Programme informatique comprenant des instructions qui, lorsque le programme est exécuté par un ordinateur, amènent celui-ci à mettre en œuvre le procédé selon l'une des revendications 1 à 10.

12. Robot, comprenant :

une articulation (20), un entraînement (22), une transmission (24) pour l'accouplement de l'entraînement (22) à l'articulation (20), ainsi qu'une commande (14) pour l'estimation d'un moment de rotation qui agit sur l'articulation (20),
dans lequel la commande (14) est configurée pour
mesurer un angle de rotation (30) d'une déformation en rotation de la transmission (24) à une position d'articulation,
**caractérisé en ce que** la commande (14) est configurée pour :

mettre en œuvre une routine d'identification pour la détermination d'un angle de rotation d'erreur dépendant de la position d'une déformation en rotation de la transmission (24), dans lequel la mise en œuvre de la routine d'identification contient la création d'un tableau de recherche (32) qui combine des données de position dans un espace d'articulation de l'articulation et des angles de rotation d'erreur identifiés,
compenser l'angle de rotation (30) mesuré au moyen de l'angle de rotation d'erreur dépendant de la position à partir du tableau de recherche (32), et
déterminer une première estimation (54) pour le moment de rotation à la position d'articulation à partir de l'angle de rotation compensé (34),
dans lequel le robot (10) est commandé d'une manière définie pendant la routine d'identification et le robot (10) se trouve, pendant la commande définie, dans un état dans lequel des influences externes agissant sur un équilibre de moment du robot (10) peuvent être exclues.

13. Procédé selon l'une des revendications 1 à 10 ou robot selon la revendication 12, dans lequel le robot (10) se déplace dans un espace de travail sans rencontrer d'obstacles pendant la commande définie.

# Fig. 1

100

| Bereitstellen und Koppeln eines Antriebs mit einem Gelenk über ein Getriebe | S101 |

| Durchführen einer Identifikationsroutine zur Bestimmung eines positionsabhängigen Fehlerdrehwinkels einer Drehverformung des Getriebes | S102 |

| Messen eines Drehwinkels einer Drehverformung des Getriebes an einer Gelenkposition | S103 |

| Kompensieren des gemessenen Drehwinkels mittels des identifizierten Fehlerdrehwinkels | S104 |

| Bestimmen einer ersten Schätzung für das Drehmomentan der Gelenkposition aus dem kompensierten Drehwinkel | S105 |

## Fig. 2

200

| Bereitstellen und Koppeln eines Antriebs mit einem Gelenk über ein Getriebe | S201 |

| Messen eines Drehwinkels einer Drehverformung des Getriebes an einer Gelenkposition | S202 |

| Messen eines Motorstroms des Antriebs an der Gelenkposition | S203 |

| Bestimmen einer ersten Schätzung für das Drehmoment an der Gelenkposition aus dem gemessenen Drehwinkel | S204 |

| Bestimmen einer zweiten Schätzung für das Drehmoment an der Gelenkposition basierend auf dem gemessenen Motorstrom | S205 |

| Fusionieren der ersten und der zweiten Schätzung zu einer konsolidierten Schätzung für das Drehmoment an der Gelenkposition | S206 |

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012202181 A1
- US 20150276436 A1
- DE 102010064270 A1
- DE 112010004664 B4